# EUROPÄISCHE PATENTSCHRIFT

(11) **EP 0 682 858 B1**
(45) Veröffentlichungstag und Bekanntmachung des Hinweises auf die Patenterteilung: **21.06.2000**
(21) Anmeldenummer: 95102407.4
(22) Anmeldetag: 21.02.1995
(51) Int. Cl.: A01D 43/10

(54) **Landwirtschaftliche Erntemaschine**
Agricultural harvester
Moissonneuse d'agriculture

(30) Priorität: 13.05.1994 DE 4416814
(43) Veröffentlichungstag der Anmeldung: 22.11.1995
(73) Patentinhaber: SAME DEUTZ-FAHR S.P.A., 24047 Treviglio (Bergamo) (IT)
(72) Erfinder: von Allwörden, Wilhelm, Dipl.-Ing., D-89168 Oberstotzingen (DE); Häfele, Martin, D-73460 Hüttlingen (DE)
(74) Vertreter: Jacobacci, Filippo

(56) Entgegenhaltungen:
- EP-A- 0 431 611
- DE-A- 2 717 900
- DE-C- 2 107 575

## Beschreibung

Die Erfindung betrifft eine Erntemaschine zur Aufbereitung von erntefähigem Blatt- oder Halmgut, insbesondere für Grünfutter, nach dem Oberbegriff des Patentanspruches 1.

Es ist allgemein bekannt, an einem Traktor eine Erntemaschine anzubauen, die eine Mäheinrichtung und eine Aufbereitungseinrichtung aufweist. Die Aufbereitungseinrichtung dient dazu, insbesondere die Halmstengel dosiert zu knicken bzw. zu verletzen, damit diese schneller trocknen. Derartige, an Traktoren angebaute Erntemaschinen befriedigen, insbesondere wenn sie auf großen Flächen eingesetzt werden sollen, letztendlich nicht, da ihre Flächenleistung begrenzt ist.

Weiterhin ist eine Erntemaschine aus der EP 431 611 A1 bekannt. Dabei wird das Blatt- oder Halmgut von einem Mähwerk auf dem Feld abgeschnitten. Danach durchläuft das Gut eine Aufbereitungsanordnung, die ein Zerfasern des Gutes zur Vergrößerung der Oberfläche bewirkt, und anschließend eine Pressanordnung, mit der aus dem aufbereiteten Gut eine Matte gepreßt wird, die zur weiteren Trocknung auf dem Feld abgelegt wird. Dabei sind die genannten Anordnungen innerhalb der Erntemaschine untergebracht.

Eine solche Erntemaschine soll derart modifiziert werden, daß sie kompakter baut und universeller einsetzbar ist. Weiterhin soll eine höhere Durchsatz- beziehungsweise Flächenleistung bei der Ernte von Blatt- oder Halmgut erzielt werden.

Aus der DE 21 07 575 C2 ist ein selbstfahrender Schwadmäher mit einer Aufbereitungseinrichtung für Grüngut bekannt geworden. Da das Grüngut nach dem Mähen und Aufbereiten lediglich abgelegt wird, kann keine optimale Ernteleistung erreicht werden. Aus der DE 27 17 900 A1 ist eine Mähmaschine bekannt, die ein überbreites, vorne an einem Traktor ankoppelbares Mähwerk aufweist. Am hinteren Anhänger ist eine weitere Vorrichtung anhängbar, die mit einem Preßwerk versehen ist, wofür der Traktor aber rückwärts fahren muß.

Aufgabe der Erfindung ist es, eine Erntemaschine zur Verfügung zu stellen, die auch für große bzw. Größtflächen geeignet ist und dennoch auf öffentlichen Verkehrswegen bewegt werden kann.

Diese Aufgabe wird durch die Merkmale des Anspruch 1 gelöst.

Weitere vorteilhafte Ausgestaltungen sind in den Unteransprüchen angegeben und im folgenden, unter Bezugnahme auf die Figuren, näher beschrieben. Dabei zeigen:
- Figur 1:: eine erfindungsgemäß ausgestaltete Erntemaschine,
- Figur 2:: weitere Ausgestaltungen an der Erntemaschine sowie ein Ernteschema.

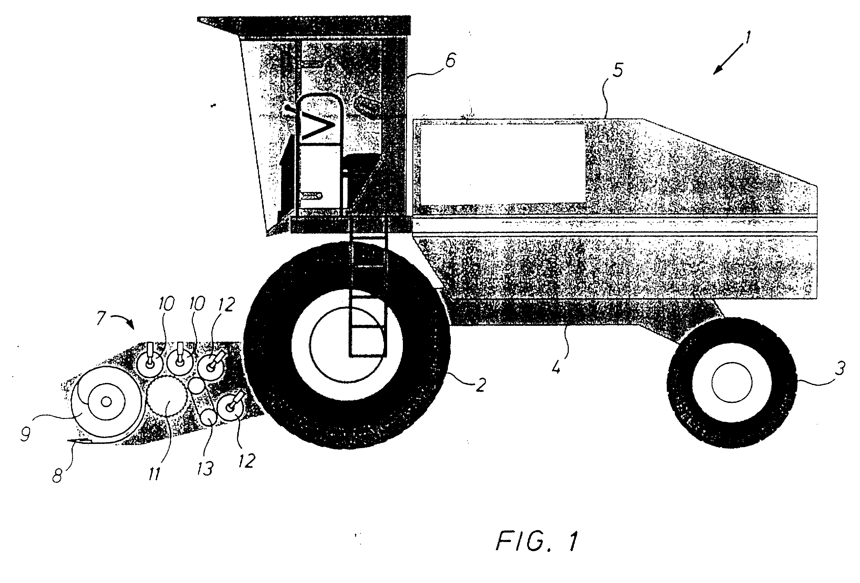

In Figur 1 ist eine erfindungsgemäß ausgestaltete Erntemaschine gezeigt und mit der Bezugsziffer 1 versehen. Die Erntemaschine 1 weist eine Vorderradeinheit 2 und eine Hinterradeinheit 3 auf, wobei insbesondere die Vorderradeinheit 2 angetrieben und die Hinterradeinheit 3 lenkbar ist. Diese beiden Radeinheiten 2 und 3 sind an einem Rahmen 4 angeordnet, auf dem ein Aufbau 5 angeordnet ist, der sich in Fahrtrichtung der Erntemaschine 1 betrachtet, hinter einem Fahrerstand 6 befindet. In der in Figur 1 gezeigten Ausführungsform der Erntemaschine 1 ist eine nicht dargestellte Antriebsquelle (zum Beispiel Dieselmotor) vorhanden, die zumindest dem Antrieb der Erntemaschine 1 dient. Somit handelt es sich bei dieser Ausführungsform um eine selbstfahrende Erntemaschine, wobei der Schutzumfang nicht darauf beschränkt ist, da es sich bei der im folgenden beschriebenen Ausführungsform auch um eine, beispielsweise von einem Traktor, gezogene Erntemaschine handeln kann.

Wie in Figur 1 gezeigt, weist die Erntemaschine 1 eine Mäheinrichtung 8 auf, der eine Schnecke 9 zugeordnet ist. Weiterhin sind Planetenwalzen 10 um eine Sonnenwalze 11 herum angeordnet, wobei die Planetenwalzen 10 und die Sonnenwalze 11 die Aufbereitungseinrichtung darstellen.

Daran im Erntefluß anschließend sind Presswalzen 12 und Gegenwalzen 13 angeordnet, die die Presseinrichtung bilden. Um die Gegenwalzen 13 herum ist ein nicht bezeichnetes Band geführt. Erfindungsgemäß ist nun vorgesehen, daß wenigstens die Mäheinrichtung 8, die Aufbereitungseinrichtung (die Planetenwalzen 10 und die Sonnenwalze 11) sowie die Presseinrichtung (die Presswalzen 12 und die Gegenwalzen 13) in zumindest einem Aggregat 7 zusammengefaßt sind, wobei das Aggregat 7 an der Erntemaschine 1 angebaut ist. Dies hat den Vorteil, daß die Erntemaschine 1 kompakt gebaut werden kann, und für weitere Einsatzzwecke nach Abnahme des Aggregates 7 universell eingesetzt werden kann. Nach Abnahme des Aggregates 7 können weitere Aggregate, die andere Funktionen erfüllen, angebaut werden. Darüberhinaus hat die Anordnung des Aggregates 7 den Vorteil, daß dieses ebenfalls kompakt gebaut werden kann und die darin angeordneten Einrichtungen nicht in der Erntemaschine 1 selbst angeordnet werden müssen. Gemäß einer weiteren Ausgestaltung der Erfindung ist das Aggregat 7 im Frontbereich der Erntemaschine angebaut. Dabei ist es weiter von Vorteil, wenn das Aggregat 7 im Frontbereich mittig (insbesondere zwischen den beiden Rädern der Vorderradeinheit 2) angeordnet ist. Dies ist insbesondere daher von Vorteil, daß vor dem Überfahren des Feldes das Blatt- oder Halmgut von der Mäheinrichtung 8 geschnitten und von der Schnecke 9 der Aufbereitungs- und Presseinrichtung auf einer Breite zugleitet wird, wobei diese Breite geringer ist als die Breite, die durch die nach innen gerichteten Außenkonturen der Räder der Vorderradeinheit 2 (beziehungsweise der Hinterradeinheit 3) ist, so daß sowohl das Überfahren des auf dem Felde stehenden Blatt- oder Halmgutes als auch der abgelegten Matte vermieden wird.

In Weiterbildung der Erfindung ist vorgesehen, daß das Aggregat 7 höhenverschwenkbar ist, so daß zum einen der Straßentransport gewährleistet ist und zum anderen unter Verwendung von Sensoren eine Anpassung an die Bodenverhältnisse, die insbesondere automatisch erfolgen kann, gegeben ist.

In Weiterbildung der Erfindung sind zwischen dem Aggregat 7 und der Erntemaschine 1 nicht dargestellte Kraftübertragungselemente vorgesehen, wobei eine ebenfalls nicht dargestellte Antriebsquelle in der Erntemaschine 1 angeordnet ist und der Antrieb der Einrichtungen ausgehend von der Antriebsquelle über die Kraftübertragungselemente erfolgt. Als Antriebsquelle kommt beispielsweise eine Brennkraftmaschine in Frage, der für den Antrieb der Erntemaschine 1 ein Hydrostat nachgeordnet ist, wobei andererseits beispielsweise über einen Riemen- oder Kettenantrieb der Antrieb der Einrichtungen erfolgen kann. Bei diesen Kraftübertragungselementen kann es sich aber auch um Wellen mit Kardangelenken handeln, wobei alternativ dazu auch ein hydraulischer oder elektromotorischer Antrieb denkbar ist. Ebenso ist es denkbar, ausgehend von der Antriebsquelle eine Einrichtung anzutreiben und von dieser ausgehend die nächste und wiederum von dieser ausgehend die übernächste Einrichtung anzutreiben. Alternativ dazu ist es denkbar, zur Erzielung unterschiedlicher Antriebsgeschwindigkeiten der einzelnen Einrichtungen diese einzeln von der Antriebsquelle aus anzutreiben. Ebenso können als Sicherheitseinrichtung oder Überlastsicherung Kupplungen innerhalb der Kraftübertragungselemente zwischen der Antriebsquelle und den Einrichtungen vorgesehen werden.

Bei der in Figur 1 gezeigten Aufbereitungseinrichtung mit den Planetenwalzen 10 und der Sonnenwalze 11 handelt es sich um die Planetenwalzentechnik. Denkbar ist auch, die Aufbereitungseinrichtung in der Reihenwalzentechnik auszuführen, bei der mehrere Walzen in zwei Ebenen hintereinander angeordnet sind und das Blatt- oder Halmgut durch den Spalt, den jeweils zwei Walzen bilden, hindurchgeführt wird. Um eine hohe Durchsatz- beziehungsweise Flächenleistung bei der Ernte zu erzielen, sind insbesondere die Planetenwalzen 10 der Aufbereitungseinrichtung sowie die Presswalzen 12 der Presseinrichtung kraftbeaufschlagt (beispielsweise durch Federkraft oder Hydraulikkraft), um in Abhängigkeit des von der Mäheinrichtung 8 gemähten Blatt- oder Halmgutes einen weitestgehend konstanten Durchsatz beziehungsweise eine konstante Dicke der Matte zu gewährleisten. Nachdem das aufbereitete Blatt- oder Halmgut die Aufbereitungseinrichtung und die Presseinrichtung durchlaufen hat, wird es als Matte auf dem Feld zur Trocknung abgelegt. In einer besonderen Ausgestaltung der Erfindung erfolgt wenigstens der Antrieb der Preßeinrichtung synchron zu der Fahrtgeschwindigkeit der Erntemaschine. Die übrigen Einrichtungen können ebenfalls synchron oder auch asynchron (zum Beispiel auch zu- beziehungsweise abschaltbar) angetrieben werden.

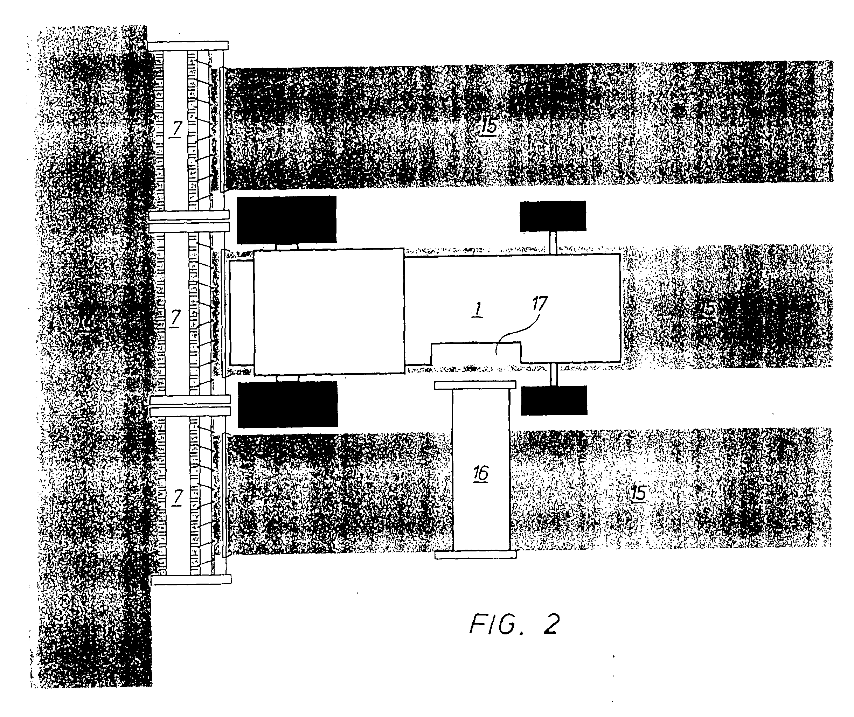

Figur 2 zeigt weitere erfindungsgemäße Ausgestaltungen der Erntemaschine sowie ein Ernteschema.

Eine weitere erfindungsgemäße Ausgestaltung besteht darin, daß mehrere Aggregate 7 an der Erntemaschine 1 angebracht sind. Bei einer bevorzugten und gezeigten Ausgestaltung liegen die mehreren im Frontbereich der Erntemaschine 1 angebauten Aggregate 7 in einer Flucht, wobei diese im wesentlichen senkrecht zu einer Längsachse der Erntemaschine 1 ausgerichtet ist. Diese Anordnung hat den Vorteil, daß das auf dem Feld stehende Erntegut 14 über eine große Breite von den Aggregaten 7 erfaßt (geschnitten, aufbereitet, gepreßt und abgelegt wird) und in Form von Matten 15 derart abgelegt wird, daß die Matten 15 sich nicht im Bereich der Räder der Vorderradeinheit 2 beziehungsweise der Hinterradeinheit 3 befinden, so daß die Matten 15 von diesen nicht überfahren werden. Somit wird gemäß Figur 2 eine Matte 15 im Mittenbereich der Erntemaschine 1 und die beiden weiteren Matten 15 seitlich neben der Erntemaschine 1 abgelegt. Auch eine außerhalb der Senkrechten liegende Flucht (also in Bezug auf die Längsachse der Erntemaschine 1 schräge Anordnung der Aggregate 7, entweder einzeln schräg versetzt oder gemeinsam schräg versetzt) ist denkbar.

In einer weiteren Ausgestaltung der Erfindung und alternativ zu der gezeigten Ausführungsform ist es denkbar, daß ein Aggregat mittig im Frontbereich angebaut ist, wobei sich die Enden des Aggregates in einem Bereich der Längs-Außenkonturen der Erntemaschinen befinden (wie beispielsweise das mittlere Aggregat 7 in Fig. 2) und zumindest ein weiteres Aggregat seitlich angebaut ist, wobei ein Ende dieses Aggregates über die Längs-Außenkonturen in Richtung der mittigen Längsachse der Erntemaschine versetzt ist. Die Anordnung eines solchen Aggregates, das in Fig. 2 mit der Bezugsziffer 16 bezeichnet ist, hat ebenfalls den Vorteil, daß das im Frontbereich angeordnete Aggregat das Erntegut 14 auf einer Breite erfaßt, so daß es nicht von den Rädern überfahren wird.

Das seitlich noch stehenbleibende Erntegut wird dann von dem nachfolgenden Aggregat 16 erfaßt. In vorteilhafter Weise sind an beiden Seiten der Erntemaschine 1 jeweils ein Aggregat 16 angeordnet. Um einen Straßentransport beziehungsweise eine Straßenfahrt der Erntemaschine 1 zu ermöglichen, wird erfindungsgemäß vorgeschlagen, daß das zumindest eine, seitlich angebaute Aggregat 16 hochklappbar ist, wobei der Aufbau 5 der Erntemaschine 1 eine Ausnehmung 17 zur Aufnahme des hochgeklappten Aggregates 16 aufweist. In der hochgeklappten Stellung des Aggregates 16 schließt dieses idealer Weise mit den Längs-Außenkonturen der Erntemaschine 1 ab, so daß diese inbesondere unter Berücksichtigung gesetzlicher Vorschriften für die Straßenfahrt einsetzbar ist.

Sind mehrere Aggregate 7 beziehungsweise 16 an der Erntemaschine 1 angebaut, ist es denkbar und wird erfindungsgemäß vorgeschlagen, daß entweder der Antrieb der weiteren Aggregate ausgehend von dem im Frontbereich, insbesondere mittig angebauten Aggregat erfolgt oder daß der Antrieb der weiteren Aggregate über weitere Kraftübertragungselemente von der Antriebsquelle aus erfolgt. Erfolgt der Antrieb der weiteren Aggregate ausgehend von dem im Frontbereich insbesondere mittig angeordneten Aggregat aus, ist der Vorteil gegeben, daß die in einer Flucht liegenden Aggregate eine Einheit bilden, die beispielsweise komplett abnehmbar und für den Straßentransport geeignet ist. Darüberhinaus ist es denkbar, Kraftübertragungselemente zwischen den in einer Flucht liegenden Aggregaten derart auszugestalten, daß die neben dem mittleren Aggregat angeordneten seitlichen Aggregate hochklappbar sind. Außerdem ist damit in einfacher Weise eine Anpassung an die Bodenverhältnisse realisierbar, wenn die einzelnen Aggregate voneinander getrennt eine unterschiedliche Höhenverschwenkbarkeit zulassen. Dies ist insbesondere bei der überbreiten Ausgestaltung der in einer Flucht liegenden Aggregate von Vorteil.

Ist ein Aggregat 16 beziehungsweise sind mehrere Aggregate 16 seitlich neben der Erntemaschine 1 angebaut, erfolgt in vorteilhafterweise der Antrieb dieser weiteren Aggregate über weitere Kraftübertragungselemente getrennt von der Antriebsquelle aus. Erfolgt der Antrieb der weiteren Aggregate über weitere Kraftübertragungselemente von der Antriebsquelle aus, ist es von Vorteil, wenn mit dem Anbau der weiteren Aggregate automatisch auch die weiteren Kraftübertragungselemente angekoppelt werden (wie dies beispielsweise von der Zapfwellentechnik bei Traktoren bekannt ist).

Der Anbau des mittig im Frontbereich der Erntemaschine 1 angeordneten Aggregates 7 erfolgt über entsprechende Kupplungsgelemente, die sich beispielsweise an dem Rahmen 4 der Erntemaschine 1 befindet. Werden weitere in einer Flucht liegende Aggregate 7 neben diesem Anggregat angebaut, sind entweder an den Enden der jeweiligen Aggregate 7 weitere Kupplungselemente vorhanden oder es sind Kupplungselemente an dem Rahmen 4 der Erntemaschine 1 vorhanden, die den Anbau der weiteren Aggregate 7 gestatten. In einer bevorzugten Ausgestaltung sind diese Kupplungsgelemente sowie die Kraftübertragungselemente an den Enden der einzelnen Aggregate 7 vorhanden, so daß sich nach dem Anbau eine kompakte Bauweise und eine direkten Funktionstüchtigkeit einstellt.

In der Figur 1 und der vorausgegangenen Beschreibung ist von einer Erntemaschine ausgegangen worden, die im Anschluß an die Aufbereitungseinrichtung eine Presseinrichtung aufweist und das Erntegut als Matte ablegt. Wie den Patentansprüchen 1 und 2 zu entnehmen ist, läßt sich die Erfindung auch verwirklichen, wenn keine Preßeinrichtung vorgesehen ist und das Erntegut nach Verlassen der Aufbereitungseinrichtung abgelegt wird. Eine derartige Erntemaschine kann daher nahezu identisch mit der zuvor beschriebenen Maschine ausgebildet sein. Sie kann - abgesehen von der Preßeinrichtung - alle zuvor beschriebenen Aggregate und Einrichtungen und denselben Fahrzeugbau aufweisen. Der wesentliche Unterschied besteht darin, daß die eine Maschine das Erntegut als gepreßte Matte, die andere das Erntegut als Schwad ablegt.

## Patentansprüche

1. Erntemaschine zur Aufbereitung von erntefähigem Blatt- oder Halmgut, insbesondere für Grünfutter, wobei die Erntemaschine (1) zumindest eine Mäheinrichtung (8) sowie eine Aufbereitungseinrichtung (10, 11) aufweist und das Gut (14) die Einrichtungen durchläuft, bevor es zur Trocknung und/ oder Weiterverarbeitung auf dem Boden abgelegt wird, wobei die Erntemaschine (1) als selbstfahrende Maschine mit einem Antriebsmotor, einer Kraftübertragungseinrichtung, zumindest einer Antriebsachse, einer Bremseinrichtung sowie einer Lenkeinrichtung und zumindest einer Lenkachse ausgebildet ist, und wenigstens die Mäheinrichtung (8) sowie die Aufbereitungseinrichtung (10, 11) in einem Aggregat (7, 16) zusammengefaßt sind, wobei das Aggregat (7) an der Erntemaschine (1) mittig im Frontbereich angebaut ist, dadurch gekennzeichnet, daß sich die Enden des Aggregates (7) in dem Bereich zwischen den Längs-Außenkonturen der Erntemaschine (1) befinden und zumindest ein weiteres Aggregat (16) angebaut ist, wobei ein Ende dieses weiteren Aggregates (16) sich außerhalb dieses Bereiches befindet.

2. Erntemaschine nach Anspruch 1, die weiterhin eine Preßeinrichtung (12, 13) aufweist, wobei das Gut (14) die Einrichtung als Matte (15) verläßt, dadurch gekennzeichnet, daß die Preßeinrichtung (12, 13) in das Aggregat (7, 16) integriert ist.

3. Erntemaschine nach Anspruch 1 oder 2, dadurch gekennzeichnet, daß das Aggregat (7) im Frontbereich der Erntemaschine (1), insbesondere mittig, angebaut und/oder abnehmbar ist.

4. Erntemaschine nach einem der vorhergehenden Ansprüche, dadurch gekennzeichnet, daß das Aggregat (7, 16) höhenverschwenkbar ist.

5. Erntemaschine nach einem der vorhergehenden Ansprüche, dadurch gekennzeichnet, daß zwischen dem Aggregat (7, 16) und der Erntemaschine (1) Kraftübertragungselemente vorgesehen sind, wobei eine Antriebsquelle in der Erntemaschine (1) angeordnet ist und der Antrieb der Einrichtungen (10 bis 13) in dem Aggregat (7, 16) ausgehend von der Antriebsquelle über die Kraftübertragungselemente erfolgt.

6. Erntemaschine nach einem der vorhergehenden Ansprüche, dadurch gekennzeichnet, daß mehrere Aggregate (7, 16) an der Erntemaschine (1) angebaut sind.

7. Erntemaschine nach einem der vorhergehenden Ansprüche, dadurch gekennzeichnet, daß die im Frontbereich der Erntemaschine (1) angebauten Aggregate (7, 16) in einer Flucht liegen, wobei diese im wesentlichen senkrecht zu einer Längsachse der Erntemaschine (1) ausgerichtet ist.

8. Erntemaschine nach einem der vorhergehenden Ansprüche, dadurch gekennzeichnet, daß das zumindest eine, seitlich angebaute Aggregat (16) hochklappbar ist, wobei der Aufbau der Erntemaschine (1) eine Ausnehmung (17) zur Aufnahme des hochgeklappten Aggregates (16) aufweist.

9. Erntemaschine nach einem der vorhergehenden Ansprüche, dadurch gekennzeichnet, daß der Antrieb der weiteren Aggregate (7, 16) ausgehend von dem im Frontbereich insbesondere mittig angebauten Aggregat (7) erfolgt.

10. Erntemaschine nach einem der vorhergehenden Ansprüche, dadurch gekennzeichnet, daß der Antrieb der weiteren Aggregate (7, 16) über weitere Kraftübertragungselemente von der Antriebsquelle in der Erntemaschine (1) erfolgt.

11. Erntemaschine nach einem der vorhergehenden Ansprüche, dadurch gekennzeichnet, daß wenigstens der Antrieb der Preßeinrichtung (12, 13) synchron zu der Fahrtgeschwindigkeit der Erntemaschine (1) erfolgt.

## Claims

1. A harvester for processing harvestable leaf or stalk produce, in particular for green fodder, wherein the harvester (1) comprises at least one reaping device (8) as well as a processing device (10, 11) and the produce (14) passes through the devices before it is laid on the ground for drying and/or further processing, wherein the harvester (1) is constructed as a self-propelled machine with a drive engine, a force transmission device, at least one drive axle, a braking device and also a steering device and at least one steering axle, and at least the reaping device (8) as well as the processing device (10, 11) are combined in a unit (7, 16), wherein the unit (7) is mounted on the harvester (1) centrally in the front region,
**characterised in that** the ends of the unit (7) are situated in the region between the longitudinal outer contours of the harvester (1) and at least one further unit (16) is mounted, one end of this further unit (16) being situated outside this region.

2. A harvester according to Claim 1, which also has a pressing device (12, 13), wherein the produce (14) leaves the device as a mat (15),
**characterised in that** the pressing device (12, 13) is integrated into the unit (7, 16).

3. A harvester according to Claim 1 or 2,
**characterised in that** the unit (7) is mounted and/or removable in the front region of the harvester (1), in particular centrally.

4. A harvester according to one of the preceding Claims,
**characterised in that** the unit (7, 16) can be upwardly tilted.

5. A harvester according to one of the preceding Claims,
**characterised in that** force transmission elements are provided between the unit (7, 16) and the harvester (1), wherein a drive source is disposed in the harvester (1) and the drive of the devices (10 to 13) in the unit (7, 16) takes place starting from the drive source via the force transmission elements.

6. A harvester according to one of the preceding Claims,
**characterised in that** several units (7, 16) are mounted on the harvester (1).

7. A harvester according to one of the preceding Claims,
**characterised in that** the units (7, 16) mounted in the front region of the harvester (1) lie in an alignment, with this being aligned substantially perpendicularly to a longitudinal axis of the harvester (1) .

8. A harvester according to one of the preceding Claims,
**characterised in that** the at least one, laterally mounted unit (16) can be upwardly tilted, wherein the body of the harvester (1) comprises a recess (17) for housing the upwardly tilted unit (16).

9. A harvester according to one of the preceding Claims,
**characterised in that** the drive of the further units (7, 16) takes place starting from the unit (7) that is mounted, in particular centrally, in the front region.

10. A harvester according to one of the preceding Claims,
**characterised in that** the drive of the further units (7, 16) takes place via further force transmission elements from the drive source in the harvester (1).

11. A harvester according to one of the preceding Claims,
**characterised in that** at least the drive of the pressing device (12, 13) takes place synchronously with the travelling speed of the harvester (1).

## Revendications

1. Machine de récolte pour la préparation de végétaux à feuilles ou à chaumes aptes à la récolte, en particulier pour fourrages verts, la machine de récolte (1) présentant au moins un dispositif de coupe (8) ainsi qu'un dispositif de préparation (10,11), et le produit (14) traversant les dispositifs avant d'être déposé sur le sol pour le séchage et/ou le traitement ultérieur, la machine de récolte (1) étant une machine automotrice munie d'un moteur d'entraînement, d'un dispositif de transmission de la force, d'au moins un essieu moteur, d'un dispositif de freinage ainsi que d'un dispositif de direction et d'au moins un essieu directeur, et au moins le dispositif de coupe (8) ainsi que le dispositif de préparation (10, 11) étant réunis en un groupe (7, 16), le groupe (7) étant monté sur la machine de récolte (1) en position centrale dans la région avant, caractérisée en ce que les extrémités du groupe (7) se trouvent dans la région comprise entre les contours longitudinaux extérieurs de la machine de récolte (1) et au moins un groupe additionnel (16) est rapporté, une extrémité de ce groupe additionnel (16) se trouvant en dehors de cette région.

2. Machine de récolte selon la revendication 1, qui présente en outre un dispositif presseur (12, 13), le produit (14) quittant le dispositif sous la forme d'un tapis, caractérisé en ce que le dispositif presseur (12, 13) est intégré dans le groupe (7, 16).

3. Machine de récolte selon la revendication 1 ou 2, caractérisé en ce que le groupe (7) est rapporté et/ou amovible dans la région avant de la machine de récolte (1), en particulier en position centrale.

4. Machine de récolte selon une des revendications précédentes, caractérisée en ce que le groupe (7, 16) peut être déplacé en hauteur par pivotement.

5. Machine de récolte selon une des revendications précédentes, caractérisé en ce qu'entre le groupe (7, 16) et la machine de récolte (1) sont prévus des éléments de transmission de la force, une source de force motrice étant agencée dans la machine de récolte (1) et l'entraînement des dispositifs (10 à 13) contenus dans le groupe (7, 16) s'effectuant à partir de la source de force motrice par l'intermédiaire des éléments de transmission de la force.

6. Machine de récolte selon une des revendications précédentes, caractérisée en ce que plusieurs groupes (7, 16) sont rapportés sur la machine de récolte (1).

7. Machine de récolte selon une des revendications précédentes, caractérisée en ce que les groupes (7, 16) rapportés dans la région avant de la machine de récolte (1) sont alignés sur une même ligne, cette ligne étant orientée sensiblement perpendiculairement à un axe longitudinal de la machine de récolte (1).

8. Machine de récolte selon une des revendications précédentes, caractérisée en ce que l'au moins un groupe (16) rapporté latéralement peut être replié vers le haut, la construction de la machine de récolte (1) présentant un évidement (17) pour recevoir le groupe (16) replié vers le haut.

9. Machine de récolte selon une des revendications précédentes, caractérisée en ce que l'entraînement des groupes additionnels (7, 16,) s'effectue en partant du groupe (7) rapporté dans la région avant, en particulier en position centrale.

10. Machine de récolte selon une des revendications précédentes, caractérisée en ce que l'entraînement des groupes additionnels (7, 16) s'effectue dans la machine de récolte (1), à partir de la source de force motrice, par l'intermédiaire d'autres éléments de transmission de la force.

11. Machine de récolte selon une des revendications précédentes, caractérisée en ce qu'au moins l'entraînement du dispositif presseur (12, 13) s'effectue en synchronisme avec la vitesse d'avance de la machine de récolte (1).
